Europäisches Patentamt

European Patent Office

Office européen des brevets

(11) Veröffentlichungsnummer: **0 036 060**
**B1**

(12) **EUROPÄISCHE PATENTSCHRIFT**

(45) Veröffentlichungstag der Patentschrift:
08.06.83

(51) Int. Cl.³: **B 01 D 35/28**

(21) Anmeldenummer: 80890145.8

(22) Anmeldetag: 04.12.80

(54) Siebboden.

(30) Priorität: 17.03.80 AT 1449/80

(43) Veröffentlichungstag der Anmeldung:
23.09.81 Patentblatt 81/38

(45) Bekanntmachung des Hinweises auf die Patenterteilung:
08.06.83 Patentblatt 83/23

(84) Benannte Vertragsstaaten:
CH DE LI SE

(56) Entgegenhaltungen:
DE-A-2 749 489
US-A-3 456 795

(73) Patentinhaber: Binder & Co. Aktiengesellschaft, Grazer Strasse 19-25, A-8200 Gleisdorf (AT)

(72) Erfinder: Neuhold, Erich, Sandriegelweg 21, A-8200 Gleisdorf (AT)

(74) Vertreter: Kretschmer, Adolf, Dipl.-Ing., Schottengasse 3a, A-1014 Wien (AT)

Siebboden

Die Erfindung bezieht sich auf einen Siebboden, bei welchem Siebplatten aus Gummi oder dergleichen gummielastischem Material zumindest an zwei gegenüberliegenden Seitenrändern auf einem Tragrahmen aus Stahl od. dgl. aufliegen, dessen Querschnitt zwei nach oben konvergierende Flanken aufweist, deren obere Ränder einen offenen Schlitz begrenzen, wobei nach unten ragende Randleisten der Siebplatten in den Schlitz einführbar sind und durch eine von oben zwischen die Randleisten der benachbarten Platten eintreibbare Klemmleiste auseinandertreibbar sind, wobei die Randleisten in der auseinandergetriebenen Stellung die Ränder der Flanken untergreifen. Bei einem solchen Siebboden werden die Siebplatten durch die durch die Klemmleiste auseinandergetriebenen Randleisten am Tragrahmen festgelegt. Bei einer bekannten Ausführungsform (AT-A-344 630 bzw. DE-A-2 749 489) sind die Randleisten mit der aus Gummi bestehenden Siebplatte aus einem Stück ausgebildet und bestehen somit auch aus Gummi. Die Befestigung der Siebplatten am Tragrahmen ist daher elastisch und nachgiebig und es ist die Gefahr eines Lösens der Siebplatte vom Rahmen gegeben.

Die Erfindung stellt sich nun die Aufgabe, die Befestigung der Siebplatten am Siebrahmen zu verbessern und so auszubilden, dass die Gefahr der Lösung der Siebplatten vom Tragrahmen im Betrieb vermieden wird.

Die Erfindung ist hierbei im wesentlichen darin gelegen, dass die Randleisten aus Metall, insbesondere Stahl, bestehen und mit den Siebplatten, insbesondere durch Vulkanisieren, fest verbunden sind. Durch diese Randleisten aus Metall werden einerseits die Ränder der Siebplatten versteift und es wird andererseits dadurch, dass die Verbindung metallisch ist, eine sichere Befestigung ermöglicht, welche auch grösseren Beanspruchungen standhält. Vorzugsweise weisen gemäss der Erfindung die Randleisten einen horizontal abgewinkelten Flansch auf, der in die Siebplatte einvulkanisiert oder an diese anvulkanisiert ist. Durch diesen horizontal abgewinkelten Flansch wird eine sichere Verbindung der metallischen Randleisten mit der Siebplatte gewährleistet. Gemäss der Erfindung sind zweckmässig die Flanschen der Randleisten mit einem die Siebplatte unterstützenden Rost, insbesondere einem Flacheisenrost oder mit Querstreben durch Schweissen, insbesondere durch Punktschweissung, verbunden. Damit wird nicht nur die Siebplatte versteift, sondern es wird vor allem eine sichere Verbindung zwischen der gummielastischen Siebplatte und den Randleisten gewährleistet, da die horizontalen Zugkräfte durch den Rost oder die Querstreben unmittelbar von einer Randleiste auf die andere übertragen werden und die Verbindungsstellen zwischen Randleisten und Siebplatte nicht belasten. Es wird die gummielastische Ausbildung der Siebplatte aufrecht erhalten, jedoch wird die Tragfähigkeit der Siebplatte erhöht, und es wird dadurch auch ermöglicht, den Abstand zwischen den tragenden Holmen des Tragrahmens zu vergrössern.

Gemäss einer bevorzugten Ausführungsform der Erfindung verläuft der an den Flansch anschliessende Teil der Randleiste senkrecht und weist an seinem unteren Ende einen nach aussen gerichteten, schräg abgewinkelten Randteil auf. Die Randleisten können daher in einfacher Weise in den Schlitz zwischen den konvergierenden Flanken des Tragrahmenholmes eingeführt werden. Beim Eintreiben der Klemmleiste werden die nach aussen abgewinkelten Randteile der beiden Randleisten erfasst und auseinandergedrückt, wodurch die Randleiste deformiert wird und die konvergierenden Flanken des Tragrahmenholmes untergreift, sodass die Siebplatten in ihrer Betriebslage gesichert sind.

Bei einer Ausbildung, bei welcher der Flansch der Randleiste in den Gummi od. dgl. bestehenden Siebboden einvulkanisiert ist, weist gemäss der Erfindung der Siebboden unterhalb der Randleiste einen Wulst auf, der in Abstand vom vertikalen Teil der Randleiste liegt, und in montiertem Zustand der Siebplatte an der Aussenseite der nach oben konvergierenden Flanken des Tragrahmens anliegt. In diesem Fall erfolgt die Abdichtung der Siebplatte gegenüber dem Rahmen durch den Wulst aus Gummi od. dgl. Bei einer Ausbildung, bei welcher der Flansch der Randleiste an der Unterseite der aus Gummi od. dgl. bestehenden Siebplatte an diese anvulkanisiert ist, ist die Auflage der Siebplatte am Tragrahmenholm metallisch. In diesem Fall kann gemäss der Erfindung zwischen dem horizontalen Flansch der Randleiste oder dem mit diesem verschweissten Rost und dem Tragrahmen eine Dichtungsschnur aus Gummi od. dgl. einlegbar sein.

In der Zeichnung ist die Erfindung an Hand von Ausführungsbeispielen schematisch veranschaulicht.

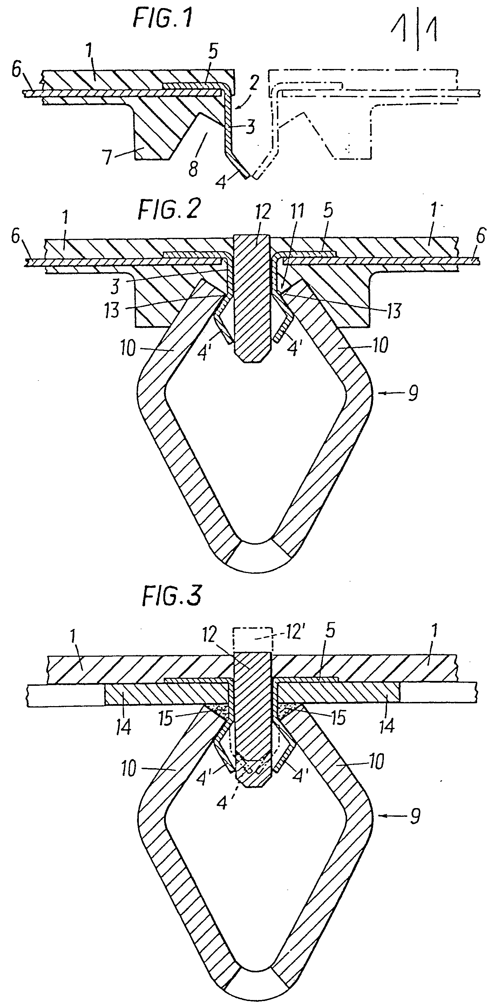

Fig. 1 zeigt den Rand einer Siebplatte im ursprünglichen Zustand vor der Montage, Fig. 2 zeigt die Siebplatten gemäss Fig. 1 in der montierten Stellung im Querschnitt durch den Tragrahmenholm, Fig. 3 zeigt eine abgewandelte Ausführungsform der Siebplatten in der montierten Stellung im Querschnitt durch den Tragrahmenholm.

Bei der Ausbildung nach Fig. 1 stellt 1 die Siebplatte dar. 2 ist eine Randleiste aus nicht rostendem Stahl, welche einen senkrechten Teil 3 aufweist, dessen unteres Ende einen nach aussen schräg abgewinkelten Randteil 4 aufweist. An das obere Ende dieses senkrechten Teiles 3 schliesst ein horizontal abgewinkelter Flansch 5 an. Mit diesem Flansch sind die Querstreben 6 aus Flachstahl durch Punktschweissung od. dgl. verschweisst. Die Randleiste 2 und die Querstreben 6 sind in die aus Gummi bestehende Siebplatte 1 einvulkanisiert. An der Unterseite weist die aus Gummi bestehende Siebplatte 1 einen mit ihr aus einem Stück bestehenden Wulst 7 auf, der in Abstand von dem vertikalen Teil 3 der Randleiste liegt, sodass zwischen dem Wulst und der Randleiste ein Schlitz 8 freibleibt.

Im montierten Zustand ist diese Siebplatte gemäss Fig. 1 in Fig. 2 dargestellt. Zwei einander gegenüberliegende Holme des Tragrahmens 9 weisen zwei nach oben konvergierende Flanken 10 auf, welche einen Schlitz 11 begrenzen. Auf den Tragrahmen 9 werden die Siebplatten gemäss Fig. 1 aufgelegt, wobei die Randleisten 2 in diesen Schlitz 11 hineinragen. Hierauf wird eine Klemmleiste 12 zwischen den beiden Siebplatten 1 eingetrieben. Die Klemmleiste 12 erfasst die beiden abgewinkelten Randteile 4, sodass der senkrechte Teil 3 der Randleiste 2 bis 13 abgewinkelt wird und die konvergierenden Flanken 10 untergreift, wodurch die Siebplatten in ihrer Lage gesichert werden. Hierbei gelangen die Randteile 4 in die Stellung 4'. Bei dieser Ausführungsform erfolgt eine Abdichtung der Siebplatten 1 gegenüber dem Siebrahmen durch die Gummiwülste 7.

Bei der Ausführungsform nach Fig. 3 ist der horizontale Flansch 5 der Randleiste an die Unterseite der Siebplatte 1 anvulkanisiert. Das gleiche gilt auch für den Flacheisenrost 14, welcher mit dem Flansch 5 verschweisst ist. In diesem Fall liegt der Flacheisenrost 14 auf dem Tragrahmen 9 auf. Zum Zwecke der Abdichtung ist daher eine Gummischnur 15 eingelegt.

Im unmontierten Zustand ist die Randleiste 4 ebenso geformt wie in Fig. 1 dargestellt, wobei die schräg abgewinkelten Randteile in der strichpunktiert dargestellten Stellung 4 liegen. Erst wenn die Klemmleiste 12 aus der strichpunktiert dargestellten Stellung 12' in die voll ausgezeichnete Stellung eingetrieben wird, werden die schräg abgewinkelten Randteile 4 der Randleiste 2 in der Stellung 4' auseinandergetrieben.

**Patentansprüche**

1. Siebboden, bei welchem Siebplatten (1) aus Gummi oder dergleichen gummielastischem Material zumindest an zwei gegenüberliegenden Seitenrändern auf einem Tragrahmen (9) aus Stahl od.dgl. aufliegen, dessen Querschnitt zwei nach oben konvergierende Flanken (10) aufweist, deren obere Ränder einen offenen Schlitz (11) begrenzen, wobei nach unten ragende Randleisten (2) der Siebplatten in den Schlitz (11) einführbar sind und durch eine von oben zwischen die Randleisten (2) der benachbarten Platten (1) eintreibbare Klemmleiste (12) auseinandertreibbar sind, wobei die Randleisten (2) in der auseinandergetriebenen Stellung die Ränder der Flanken (10) untergreifen, dadurch gekennzeichnet, dass die Randleisten (2) der Siebplatten aus Metall, insbesondere Stahl, bestehen und mit den Siebplatten (1), insbesondere durch Vulkanisieren, fest verbunden sind.

2. Siebboden nach Anspruch 1, dadurch gekennzeichnet, dass die Randleisten (2) einen horizontal abgewinkelten Flansch (5) aufweisen, der in die Siebplatte (1) einvulkanisiert oder an diese anvulkanisiert ist.

3. Siebboden nach Anspruch 2, dadurch gekennzeichnet, dass die Flanschen (5) der Randleisten (2) mit einem die Siebplatte unterstützenden Rost, insbesondere einem Flacheisenrost, oder mit Querstreben (6) durch Schweissen, insbesondere durch Punktschweissung, verbunden ist.

4. Siebboden nach Anspruch 2 oder 3, dadurch gekennzeichnet, dass der an den Flansch (5) anschliessende Teil (3) der Randleisten (2) senkrecht verläuft und an seinem unteren Ende einen nach aussen gerichteten schräg abgewinkelten Randteil (4) aufweist.

5. Siebboden nach einem der Ansprüche 1 bis 4, dadurch gekennzeichnet, dass bei einer Ausbildung, bei welcher der Flansch (5) der Randleiste (2) in den aus Gummi od.dgl. bestehenden Siebplatte (1) einvulkanisiert ist, die Siebplatte unterhalb der Randleiste einen Wulst (7) aufweist, der in Abstand vom vertikalen Teil (4) der Randleiste (2) liegt, und in montiertem Zustand der Siebplatte (1) an der Aussenseite der nach oben konvergierenden Flanken (10) des Tragrahmens (9) anliegt.

6. Siebboden nach einem der Ansprüche 1 bis 4, dadurch gekennzeichnet, dass bei einer Ausbildung, bei welcher der Flansch (5) der Randleiste (2) an der Unterseite der aus Gummi od.dgl. bestehenden Siebplatte (1) anvulkanisiert ist, zwischen dem Flansch (5) der Randleiste (2) oder dem mit diesem verschweissten Rost (14) und dem Tragrahmen (9) eine Dichtungsschnur (15) aus Gummi od.dgl. einlegbar ist.

**Revendications**

1. Plancher à tamissage, dans lequel des plaques à tamis (1) en caoutchouc ou en un matériel elastique similaire reposent avec deux bords lateraux opposés sur un cadre porteur (9) en acier ou similaire ayant une section transversale avec deux flancs (10) convergants vers le haut et dont les bords supérieurs délimitent une fente (11) ouverte vers le haut, dans laquelle des tringles marginales (2) avec des bords faisant saillie vers le bas des plaques à tamis peuvent être inserées et separées l'une de l'autre par une tringle de serrage (12) destinée à d'être enfoncée d'en haut entre les tringles marginales (2) des plaques (1) voisines, et les tringles marginales (2) prenant, dans leur position separée l'une de l'autre, prise sous les bords des flancs (10), caracterisé en ce que les tringles marginales (2) des plaques à tamis sont realisées en metal, en particulier en acier, et sont fixées, en particulier par vulcanisation, avec les plaques à tamis (1).

2. Plancher à tamissage selon la revendication 1, caracterisé en ce que les tringles marginales (2) comprennent und bride (5) coudée en direction horizontale et étant vulcanisée dans ou sur la plaque à tamis (1).

3. Plancher à tamissage, selon la revendication 2, caracterisé en ce que les brides (5) des tringles marginales (2) sont connectées à une grille, en particulier une grille en méplats en fer, ou avec des entretoises latérales par soudage, en particulier par soudage par points.

4. Plancher à tamissage selon la revendication 2 ou 3, caracterisé en ce que la partie (3) des tringles marginales (2) joignant la bride (5) s'étand en direction verticale et comprend à sa extrémité inférieure une partie marginale (4) qui est repliée en position inclinée et dirigée vers l'extérieur.

5. Plancher à tamissage selon une des revendications 1 à 4, caracterisé en ce que, pour une construction dans laquelle la bride (5) de la tringle marginale (2) est vulcanisée dans la plaque à tamis (1), en caoutchouc ou similaire, la plaque à tamis (1) comprend au dessous de la tringle marginale, un renflement (7) qui se trouve à distance de la partie verticale (4) de la tringle marginale (2) et est, en position de montage de la plaque à tamis (1), en contact avec la surface extérieure de flancs (10) du cadre porteur (9) qui convergent vers le haut.

6. Plancher à tamissage selon une des revendications 1 à 4, caracterisé en ce que, pour une construction dans laquelle la bride (5) de la tringle marginale (2) est vulcanisée sur le bas de la plaque à tamis (1) en caoutchouc ou similaire, une corde de bourrage (15) en caoutchouc ou similaire peut être inserée entre la bride de la tringle marginale (2) ou la grille (14) soudée avec celle-ci et le cadre porteur (9).

**Claims**

1. Screening floor in which sieve plates (1) of rubber or similar rubber-elastic material rest at least at two opposed lateral edges on a supporting frame (9) of steel or the like, said supporting frame having two flanks (10) converging in upward direction and delimiting with their upper edges an open slot (11), downawardly extending marginal strips (2) of the sieve plates being capable of being inserted into the slot (11) and being capable of being separated one from the other by means of a clamping ledge (12) to be forcibly driven between the marginal strips (2) of adjacent sieve plates (1) and the marginal strips (2) gripping under the edges of the flanks (10) in their separated position, characterized in that the marginal strips (2) of the sieve plates consist of metal, particularly of steel, and are firmly connected, particularly by vulcanization, with the sieve plates (1).

2. Screening floor according to claim 1, characterized in that the marginal strips (2) have a horizontally bent flange (5) which is vulcanized into or onto the sieve plate (1).

3. Screening floor according to claim 2, characterized in that the flanges (5) of the marginal strips (2) are connected by welding, particularly by spot welding, with a grate supporting the sieve plate, particularly a flat iron grate, or with transverse struts (6).

4. Screening floor according to claim 2 or 3, characterized in that the portion (3) of the marginal strips (2), which adjoins the flange (5), extends in vertical direction and has at its bottom end an obliquely bent edge portion (4) directed in outward direction.

5. Screening floor according to any of claims 1 to 4, characterized in that in a construction in which the flange (5) of the marginal strip (2) is vulcanized into the sieve plate (1) consisting of rubber or the like, the sieve plate has below the marginal strip a bead (7) located at a distance from the vertical portion (4) of the marginal strip (2) and contacting in mounted position of the sieve plate (1) the outer side of the upwardly converging flanks (10) of the supporting frame (9).

6. Screening floor according to any of claims 1 to 4, characterized in that in a construction in which the flange (5) of the marginal strip (2) is vulcanized onto the bottom side of the sieve plate (1) consisting of rubber or the like, a sealing cord (15) of rubber or the like can be placed between the flange (5) of the marginal strip (2) or the grate (14) welded therewith and the supporting frame (9).

FIG.1

FIG.2

FIG.3